# EUROPÄISCHE PATENTSCHRIFT

(11) **EP 1 300 284 B1**
(45) Veröffentlichungstag und Bekanntmachung des Hinweises auf die Patenterteilung: **24.10.2007**
(21) Anmeldenummer: 02021414.4
(22) Anmeldetag: 25.09.2002
(51) Int. Cl.: B60P 7/13

(54) **Verriegelungsanordnung für Container**
Container locking arrangement
Dispositif de verrouillage pour conteneur

(30) Priorität: 02.10.2001 DE 10148728
(43) Veröffentlichungstag der Anmeldung: 09.04.2003
(73) Patentinhaber: Schmitz Gotha Fahrzeugwerke GmbH, 99867 Gotha (DE)
(72) Erfinder: Schmidt, Hartmut, 99869 Seebergen (DE); Koch, Josef, 89081 Ulm (DE)
(74) Vertreter: Weber, Gerhard

(56) Entgegenhaltungen:
- DE-U- 7 136 868
- US-A- 3 507 226
- US-A- 3 717 372
- US-A- 4 026 596
- US-A- 4 437 211

## Beschreibung

Die Erfindung betrifft eine Verriegelungsanordnung zur Halterung von Containern auf einem Fahrgestell.

Verriegelungsanordnungen zur Halterung von Containern auf einem Fahrgestell sind typischerweise nach Art von sogenannten Twist-Locks ausgeführt, welche mit Beschlägen an Containern zusammenwirken. Bei solchen Twist-Locks definiert eine einen Containerbeschlag zuweisende Auflagefläche eine vertikale Halteposition. Durch die Auflagefläche hindurch greift ein Riegelbolzen mit einem an zwei gegenüber liegenden Seiten abgeflachten Kopf, welcher auch durch ein Langloch des Containerbeschlags reicht. Durch Drehen des Riegelbolzens um eine vertikale Drehachse wird der Kopf zwischen einer Löseposition, in welche der Kopf innerhalb der Kontur des Langlochs liegt, und einer Verriegelungsstellung, in welcher der Kopf die Ränder des Langlochs übergreift, verschwenkt. Derartige Verriegelungsanordnungen sind z. B. aus der US 3 717 372 A oder der DE 7136868 U1 bekannt. In der Verriegelungsstellung kann der Riegelbolzen zusätzlich nach unten gegen die Ränder des Langlochs verspannt sein. Der Vorgang der Verschwenkung zwischen der Lösestellung und der Verriegelungsstellung kann ein Anhebend es Riegelkopfes beinhalten.

Fahrgestelle zur Aufnahme von wechselbaren Containern können mit einem Stufenrahmen als sogenannte Gooseneck-Fahrgestelle ausgeführt sein und dadurch im Rahmen gegebener Vorschriften High Cube (HC)-Container mit Gooseneck-Tunnel im Containerboden aufnehmen. Um auf solchen Stufen rahmen auch Container mit ebener Bodenfläche transportieren zu können, sind verschiedene Ausführungen von am Fahrgestell befestigten Verriegelungsanordnungen, die von unten mittels eines verriegelbaren Drehzapfens in Beschläge des Containers eingreifen, bekannt.

Beispielsweise zeigt die EP 0 337 011 A1 eine Tragvorrichtung, welche um eine horizontale Achse schwenkbar am Fahrgestell gelagert ist und zwei Verriegelungseinrichtungen aufweist, welche unterschiedliche Abstände zur Schwenkachse aufweisen und wahlweise in die Tragstellung geschwenkt werden können.

In der DE 296 16 083 U1 ist eine höhenverstellbare Verriegelungseinrichtung für Wechselbehälter beschrieben, bei welcher ein erstes Verriegelungsgehäuse für eine tieferliegende Abstützung fest mit einem Träger verbunden ist und ein zweites Verriegelungsgehäuse für die tieferliegende Abstützung seitlich neben dem ersten Verriegelungsgehäuse liegt und durch Schwenkung um ein Gelenk auf das erste Gehäuse aufgesetzt werden kann, um eine höherliegende Abstützung zu bilden.

Beiden bekannten Lösungen gemeinsam ist der Nachteil, dass durch die zwei Verriegelungsgehäuse die Anordnungen voluminös, schwer und teuer werden.

Aus der DE 195 38 915 A1 ist eine Verriegelungsanordnung bekannt, bei welcher mit einem Fahrgestell eine vertikal prismatische Führung fest verbunden ist. In der Führung ist ein Schieber vertikal verschiebbar und in zwei verschiedenen Höhenpositionen verriegelbar ist. An dem Schieber ist seitlich versetzt ein Verriegelungsgehäuse mit einer Drehzapfenverriegelung befestigt, welches mit dem Schieber höhenverstellbar ist. Eine ähnliche Verriegelungsanordnung ist aus der DE 296 22 249 U1 bekannt.

Die DE 197 55 638 C2 zeigt eine Verriegelungsanordnung, bei welcher in Weiterentwicklung der DE 195 38 915 A1 das Verriegelungsgehäuse selbst innerhalb der Vertikalführung liegt und in zwei Höhenpositionen festlegbar ist.

In der DE 19 66 501 A1 ist eine Vorrichtung zum Verriegeln von Transportbehältern auf Fahrzeugen beschrieben, bei welcher ein Verriegelungseinsatz zwischen einer oberen Arbeitsstellung und einer unteren zurückgezogenen Stellung verschiebbar ist. An einer vertikalen Platte des Einsatzes ist ein Vorsprung ausgebildet, welcher in eine Aussparung einer Rückwandplatte eingreift und den Einsatz vertikal abstützt. Ein lösbares Sperrglied hält den Vorsprung in der Aussparung. Eine zweite Arbeitsposition ist nicht vorgesehen.

Der vorliegenden Erfindung liegt die Aufgabe zugrunde, eine einfach aufgebaute und handhabbare, kostengünstige Verriegelungsanordnung zur Halterung von Containern in zwei unterschiedlichen Höhenpositionen anzugeben.

Die Erfindung ist im Patentanspruch 1 beschrieben. Die abhängigen Ansprüche enthalten vorteilhafte Ausgestaltungen und Weiterbildungen der Erfindung.

Die erfindungsgemäße Verriegelungsanordnung ermöglicht insbesondere in der oberen Position die stabile vertikale Abstützung der Verriegelungseinheit in einer Stützlageranordnung, indem die Verriegelungseinheit durch Verschwenken um eine horizontale Achse oder durch Verschiebung mit horizontaler Bewegungskomponente, vorzugsweise durch eine Kombination beider Bewegungsformen aus der oberen Halteposition verschoben werden kann, ohne dass ein vertikal unterstützendes zusätzliches Element wie ein Steckbolzen oder ein Zwischenrohrabschnitt verlagert werden muss. Die vertikale Abstützung kann dadurch sehr stabil und konstruktiv einfach und mit geringem Platzbedarf aufgebaut sein und die Handhabung ist besonders einfach. Unter der Verschwenkung vertikaler Richtung ist dabei eine Schwenkbewegung mit überwiegend vertikaler Schwenkbewegungskomponente einer von der Schwenkachse beabstandeten Abstützung der Verriegelungseinheit. Vorzugsweise bildet das Schwenklager selbst eine zweite Abstützung. Die beiden beabstandeten Abstützungen schließen in horizontaler Richtung vorteilhafterweise die Auflagefläche eines zu haltenden Containers ein. Bei der Verschwenkung der Verriegelungseinheit aus einer Halteposition wird vorteilhafterweise die Auflagefläche der Verriegelungseinheit für den Container anfänglich nach oben verschwenkt.

Besonders vorteilhaft ist eine Kombination einer Schwenkbewegung und einer Verschiebung mit einer horizontalen Bewegungskomponente der Verriegelungseinheit. Dabei kann insbesondere vorgesehen sein, dass die Verriegelungseinheit in wenigstens der oberen, vorzugsweise auch der unteren Halteposition durch aufeinander abgestimmte Ausgestaltung von Verriegelungseinheit, Trägeranordnung und ggf. diese verbindenden Führungselementen gegen translatorische Verlagerung formschlüssig festgelegt ist, und dass diese Festlegung erst durch Verschwenken der Verriegelungseinheit um eine horizontale Achse um einen Mindestwinkel von z.B. > 45° aufgehoben werden kann. Da bei aufgesetztem und mittels der in einen Containerbeschlag eingreifenden Verriegelungseinheit verriegeltem Container die Verriegelungseinheit z.B. in der typischen Ausführung als Drehzapfenverriegelung bereits durch den Eingriff in den Containerbeschlag gegen Verschwenken an die horizontale Schwenkachse gesperrt ist, ist bei aufgesetztem und verriegeltem Container die Verriegelungseinheit auch gegen hohe vertikal und horizontal wirkende Kräfte sicher in der Trägeranordnung gehalten.

Die Verschwenkbarkeit der Verriegelungseinheit um eine horizontale Achse kann gemäß einer Weiterbildung der Erfindung vorteilhaft dazu ausgenutzt werden, die Verriegelungseinheit in eine tiefer als die untere Halteposition liegende Parkposition zu verlagern, wozu vorzugsweise eine Verschwenkung aus einer Halteposition um mehr als 180° vorgenommen wird.

Die Verlagerung der Verriegelungseinheit relativ zu der Trägeranordnung in einer Führung einer zwischen Trägeranordnung und Verriegelungseinheit bestehenden Kulissenanordnung ermöglicht eine besonders einfache und sichere Handhabung der Verriegelungsanordnung, wobei vorteilhafterweise die Trägeranordnung zwei parallele vertikale Platten aufweist, welche die Verriegelungseinheit zwischen sich einschließen und in denen jeweils eine Kulissenbahn ausgebildet ist, in welcher ein mit der Verriegelungseinheit verbundenes Kulissenelement geführt ist. Das Kulissenelement kann bevorzugt zugleich als Schwenkwelle für eine Verschwenkung der Verriegelungseinrichtung um eine horizontale Achse dienen. Das Kulissenelement kann z.B. ein vorzugsweise lösbar mit der Verriegelungseinheit verbundener Bolzen, Stab etc. sein. Die Führung in der Kulissenanordnung kann vorteilhaft in der Weise mit der Verschwenkung kombiniert sein, dass Endpunkte und/oder Umkehrpunkte einer Kulissenbahn zugleich Schwenklager für die Verschwenkung bilden.

Die Führung der Verriegelungseinheit durch die Kulissenanordnung kann vorteilhafterweise zugleich als Sicherung gegen Verlieren und/oder schnelles Entwenden der Verriegelungseinheit dienen.

Der von den beiden vertikalen, vorzugsweise parallelen Platten begrenzte Raum ist vorteilhafterweise in der von dem Querträger abgewandten Richtung weitgehend offen, wodurch insbesondere ein einfacher Zugriff auf die Verriegelungseinheit für deren Verstellung und/oder zur Betätigung der Verriegelung sowie während der Verlagerung der Verriegelungseinheit zwischen den Haltepositionen oder ggf. einer Parkposition eine Bewegung der Verriegelungseinrichtung über die Plattenränder hinaus möglich ist.

Die Verriegelungseinrichtung ist vorteilhafterweise als Drehzapfenverriegelung, insbesondere mit verspannbarem Drehzapfen ausgeführt. Die Verriegelungseinheit kann in beiden Haltepositionen und ggf. der Parkposition durch ein oder mehrere Sicherungselemente in ihrer Lage relativ zu der Trägeranordnung gesichert sein. Die Sicherungselemente sind vorzugsweise unter Federspannung in ihrer Sicherungsposition gehalten und beispielsweise als an der Trägeranordnung befestigte Federriegel mit einem in eine Gegenöffnung der Verriegelungseinheit eingreifenden Sicherungsbolzen ausgeführt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine bevorzugte Ausführung der Erfindung bei in oberer Halteposition befindlicher Verriegelungseinheit mit Blickrichtung parallel zur Fahrzeuglängsachse
- Fig. 2: eine Seitenansicht zu Fig. 1 mit Blickrichtung quer zur Längsachse des Fahrzeugs
- Fig. 3: eine Draufsicht auf Fig. 1
- Fig. 4: die Verriegelungseinheit in einer ausgeklappten Zwischenposition
- Fig. 5: eine Fig. 1 entsprechende Ansicht bei in unterer Halteposition befindlicher Verriegelungseinheit
- Fig. 6: eine Seitenansicht zu Fig. 5
- Fig. 7: die Verriegelungseinheit in einer Parkposition
- Fig. 8: eine andere vorteilhafte Kulissenführung
- Fig. 9: eine Kulissenführung mit Parallelverschiebung
- Fig. 10: einen weiteren Kulissenverlauf

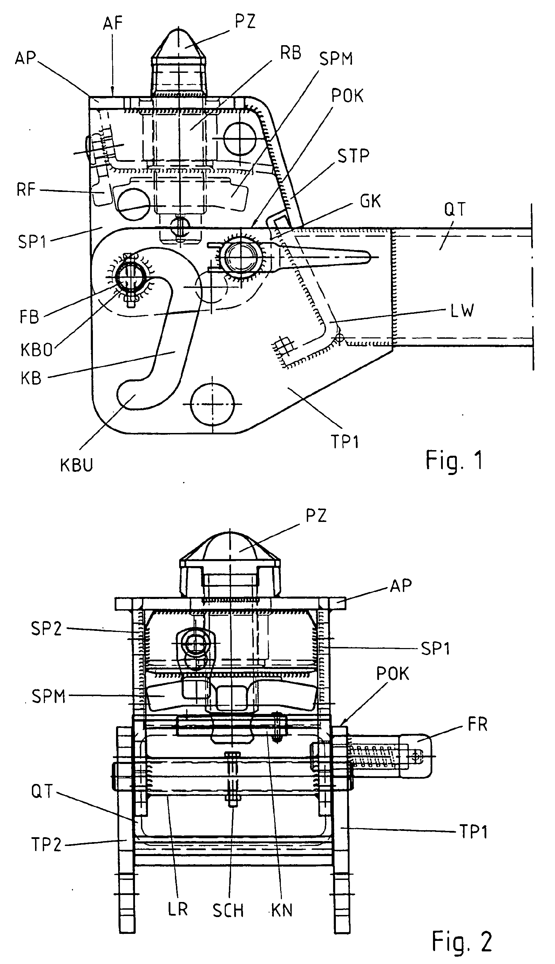

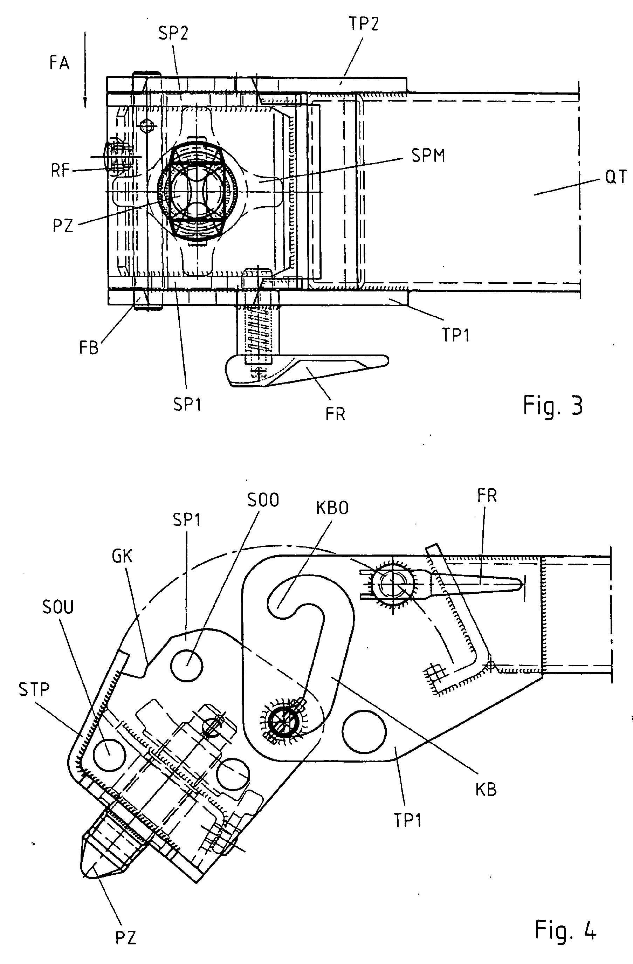

Die in Fig. 1 bis Fig. 7 skizzierte Anordnung weist an einem Querträger QT an dessen der Mittellängsachse eines Fahrgestells abgewandtem Ende eine Trägeranordnung auf, welche im wesentlichen aus zwei vertikalen Tragplatten TP1, TP2 besteht, welche z.B. an die vertikalen Seitenflächen des als Rechteckprofil ausgebildeten Querträgers angesetzt und mit dem Querträger verschweißt sind. Die Art der Befestigung der Tragplatten an dem Querträger ist im folgenden nicht weiter von Bedeutung.

Die beiden Tragplatten verlaufen eben und parallel zueinander und begrenzen in Fahrtrichtung FA, d.h. in Längsrichtung des Fahrgestells einen Aufnahmeraum, innerhalb dessen eine Verriegelungseinheit verschiedene Positionen einnehmen kann. In den Tragplatten TP1, TP2 sind geformte Kulissenbahnen KB ausgebildet, in welchen ein in Fahrtrichtung verlaufender Führungsbolzen FB als Kulissenelement geführt ist. Die Tragplatten weisen horizontale Oberkanten POK auf.

Eine der Tragplatten, vorzugsweise die in Fahrtrichtung liegende Tragplatte TP1 trägt einen Federriegel FR mit einem Sicherungsbolzen, welcher je nach Position der Verriegelungseinheit in eine von mehreren Sicherungsöffnungen eingreift.

Die Verriegelungseinheit besteht im bevorzugten skizzierten Beispiels aus einem Verriegelungsgehäuse, welches einen verspannbaren Verriegelungszapfen enthält. Der Verriegelungszapfen ragt mit einem am oberen Ende eines Riegelbolzens RB befindlichen, beidseitig abgeflachten pilzförmigen Kopf PZ über die obere Auflagefläche AF des Verriegelungsgehäuses hinaus und greift beim Aufsetzen eines Containers in eine nach unten weisende Öffnung eines Container-Eckbeschlags EB ein. Mittels eines Knebels KN am unteren Ende des Riegelbolzens RB kann der gesamte Zapfen um 90° gedreht werden und verriegelt so den Eckbeschlag. Mittels einer Spannmutter SPM auf einem Gewinde des Riegelbolzens kann der Verriegelungszapfen nach unten gezogen und der Containerbeschlag gegen das Verriegelungsgehäuse verspannt werden. Eine Riegelfalle RF verhindert ein unbeabsichtigtes Lösen der Spannmutter SPM. Das beschriebene Verriegelungsprinzip mittels eines verspannbaren vertikalen Verriegelungszapfens ist bekannt und gebräuchlich.

Das Verriegelungsgehäuse umfasst in der skizzierten vorteilhaften Ausführung im wesentlichen zwei parallele vertikale Seitenplatten SP1, SP2, eine horizontale obere Auflageplatte AP, eine seitliche Stützplatte STP und eine untere Gegenplatte, an welcher sich die Spannmutter abstützt.

Die Seitenplatten SP1, SP2 verlaufen parallel zu den Tragplatten TP1, TP2 innerhalb des von diesen begrenzten Aufnahmeraums und in geringem seitlichen Abstand von diesen. Die untere Gegenplatte UP verläuft wiederum zwischen den beiden Seitenplatten SP1, SP2. Die Auflageplatte AP und die Stützplatte STP sind vorzugsweise einstückig als abgewinkelte Platte ausgeführt. Auflageplatte mit Stützplatte, Seitenplatten und Gegenplatte sind vorteilhafterweise miteinander zu dem Verriegelungsgehäuse der Verriegelungseinheit verschweißt.

Der Führungsbolzen FB ist durch Bohrungen der Seitenplatten SP1, SP2 hindurchgeführt und in Längsrichtung gegen Verschiebung gesichert, beispielsweise indem der Führungsbolzen in einem zwischen die Seitenplatten eingeführten und vorzugsweise mit diesen verschweißten Lagerrohr LR verläuft und mittels eines quer durch Lagerrohr und Führungsbolzen durchgreifenden Sicherungselements gegen Verschiebung in Längsrichtung gesichert ist. Das Sicherungselement, z.B. eine Schraube SCH, ist vorzugsweise nur unter Verwendung eines Werkzeugs lösbar, so dass zwar der Sicherungsbolzen in Längsrichtung und danach die Verriegelungseinheit aus dem Aufnahmeraum entnehmbar sind, eine unbefugte Entwendung aber durch den notwendigen Werkzeugeinsatz erschwert ist. Andere Sicherungsmöglichkeiten für einen derartigen Führungsbolzen sind in verschiedener Ausführung bekannt.

Das Verriegelungsgehäuse ist um die Längsachse des Führungsbolzens FB mit diesem schwenkbar und mit dem Führungsbolzen entlang der Kulissenbahn verschiebbar. Der Führungsbolzen dient zugleich als einseitige Abstützung des Verriegelungsgehäuses gegen die Tragplatten, zumindest in der in Fig. 1 skizzierten oberen Halteposition, wo der Bolzen an einem oberen Ende KBO der Kulissenbahn einliegt und einseitig eine Gewichtsbelastung des Verriegelungsgehäuses auf die Tragplatten überträgt. Der Führungsbolzen FB ist in vertikaler Projektion nach außen gegen den Verriegelungszapfen versetzt. Das Verriegelungsgehäuse ist weiteres in der oberen Halteposition dem Führungsbolzen bezüglich des Verriegelungszapfens gegenüberliegend durch die Stützplatte STP abgestützt, welche auf dem Querträger QT aufsteht.

Das Querträgerprofil ist zum Aufnahmeraum zwischen den Tragplatten hin durch eine Winkelplatte LW verschlossen. Die Seitenplatten SP1, SP2 des Verriegelungsgehäuses liegen mit einer Gegenkante GK der Winkelplatte LP in deren oberem Bereich gering beabstandet gegenüber, wobei die Form der Gegenkanten eine horizontale oder schräge Verschiebung des Verriegelungsgehäuses aus der skizzierten Endlage des Führungsbolzens heraus verhindern, jedoch eine Verschwenkung des Verriegelungsgehäuses um die Längsachse des Führungsbolzens im Gegenuhrzeigersinn nach Lösen des Federriegels FR zulassen.

Nach einer solchen Verschwenkung des Verriegelungsgehäuses aus der in Fig. 1 skizzierten Position im Uhrzeigersinn um ca. 90° kann das Verriegelungsgehäuse mit dem in der Kulissenbahn geführten Führungsbolzen aus dessen Endposition im oberen Ende KBO der Kulissenbahn verschoben werden, wobei die Verschiebung insbesondere anfänglich eine wesentliche horizontale Verschiebungskomponente umfasst. Die Verschiebung entlang der Kulissenbahn führt den Führungsbolzen in die untere Endposition KBU der Kulissenbahn wobei während der Verschiebung das Verriegelungsgehäuse über die seitlichen Ränder der Tragplatten hinausragt und der innerhalb des Aufnahmeraums zwischen den Tragplatten liegende Teil des Verriegelungsgehäuses, insbesondere der Seitenplatten SP1, SP2 und der Stützplatte STP leicht an der Winkelplatte vorbei geführt werden kann.

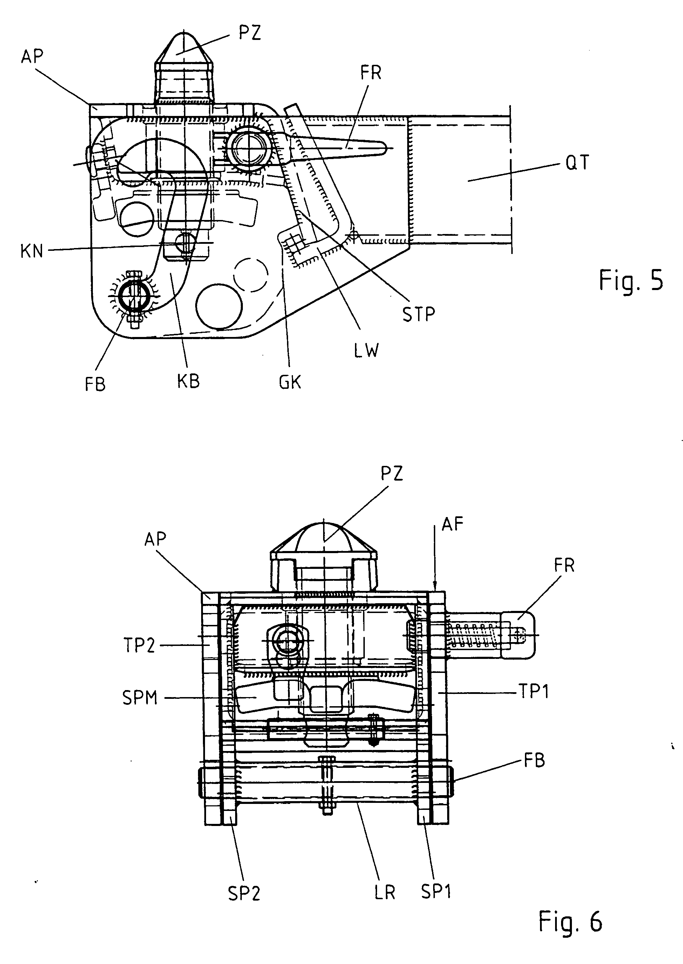

In der Position des Führungsbolzens am unteren Ende KBU der Kulissenbahn wird das Verriegelungsgehäuse im Uhrzeigersinn zurückgeschwenkt in die in Fig. 5 und Fig. 6 skizzierte untere Halteposition, wobei die Gegenkanten der Seitenplatten SP1, SP2 in geringem Abstand der unteren Kante der Winkelplatte LW gegenüberstehen und hierdurch eine horizontale Verschiebung des Verriegelungsgehäuses zur Mittellängsebene des Fahrzeugs hin verhindern. Eine horizontale Verschiebung in entgegengesetzter Richtung ist hier wie auch in der oberen Halteposition durch das Einliegen des Führunsgbolzens im Ende der Kulissenbahn verhindert. Zusätzlich kann der Überstand der Winkelplatte LW über die Oberkante des Querträgers QT in der oberen bzw. ein auf die Winkelplatte aufgeschweißter Vierkantstab eine Sicherung gegen seitliche Verschiebung bieten. Eine vertikale Verschiebung des Verriegelungsgehäuses ohne Verschwenkung ist durch den zumindest annähernd horizontalen Verlauf der Kulissenbahn im Bereich ihres unteren Endes verhindert. Eine Verschwenkung ist bei verspanntem Verriegelungszapfen nicht möglich.

Die Stützplatte STP taucht bei der Verschiebung und Verschwenkung der Verriegelungseinheit in die untere Halteposition zwischen die Tragplatten TP1, TP2 ein. Eine Abstützung des Verriegelungsgehäuses gegen vertikale Belastung erfolgt in der in Fig. 5 und Fig. 6 skizzierten Position vorzugsweise in der Form, dass die obere Auflageplatte AP unmittelbar auf den horizontalen oberen Plattenkanten POK der Tragplatten TP1, TP2 aufliegt.

Eine Sicherung der Position der Verriegelungseinheit in der oberen und der unteren Halteposition mittels des in Sicherungsöffnungen SOO bzw. SOU der Seitenplatte SP1 eingreifenden Federriegels ist insbesondere für den unbelasteten Zustand des Verriegelungsgehäuses von Bedeutung.

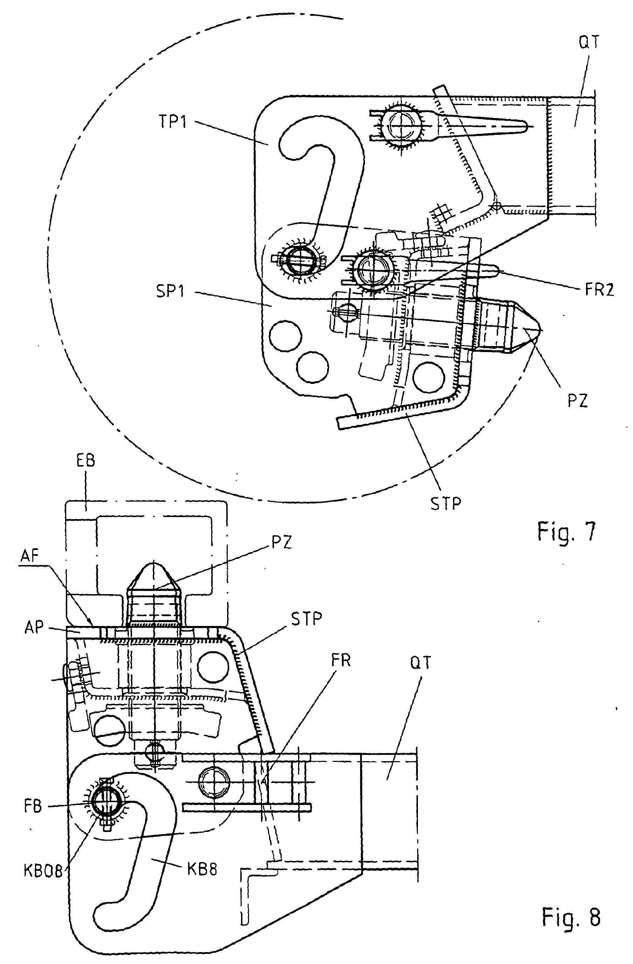

Gemäß einer besonders vorteilhaften Weiterbildung der in Fig. 1 bis Fig. 6 skizzierten Verriegelungsanordnung kann vorgesehen sein, die Verriegelungseinheit aus der in Fig. 4 skizzierten ausgeschwenkten Position nicht im Uhrzeigersinn in eine Halteposition sondern im Gegenuhrzeigersinn weiter in eine in Fig. 7 skizzierte Parkposition zu verschwenken und z.B. durch einen weiteren Federriegel FR2 in dieser zu sichern. Durch Verschwenken in die Parkposition entfällt der Überstand des Verriegelungszapfens über die Oberkanten der Tragplatten und die Verriegelungsanordnung kann auch für die Abstützung kürzerer Container an Zwischenpositionen in Längsrichtung der Fahrstelle eingesetzt und beim Transport längerer Behälter mit tiefliegendem Containerboden weggeklappt werden.

In Fig. 8 ist eine Kulissenbahn KB8 skizziert, bei welcher der Abschnitt zum oberen Ende KBO8 der Kulissenbahn im wesentlichen horizontal verläuft. Hierdurch kann eine klarere Festlegung des Verriegelungsgehäuses gegen abhebend wirkende Kräfte erzielt werden. Demgegenüber weist die in dem Beispiel nach Fig. 1 bis Fig. 7 gewählte Kulissenführung mit einem zum oberen Ende KBO der Kulissenbahn im letzten Abschnitt fallenden Verlauf den Vorteil auf, dass bei der typischen Belastung der Anordnung mit dem Gewicht des Containers der Führungsbolzen auch in horizontaler Richtung in eine eindeutige stabile Endposition gedrückt wird.

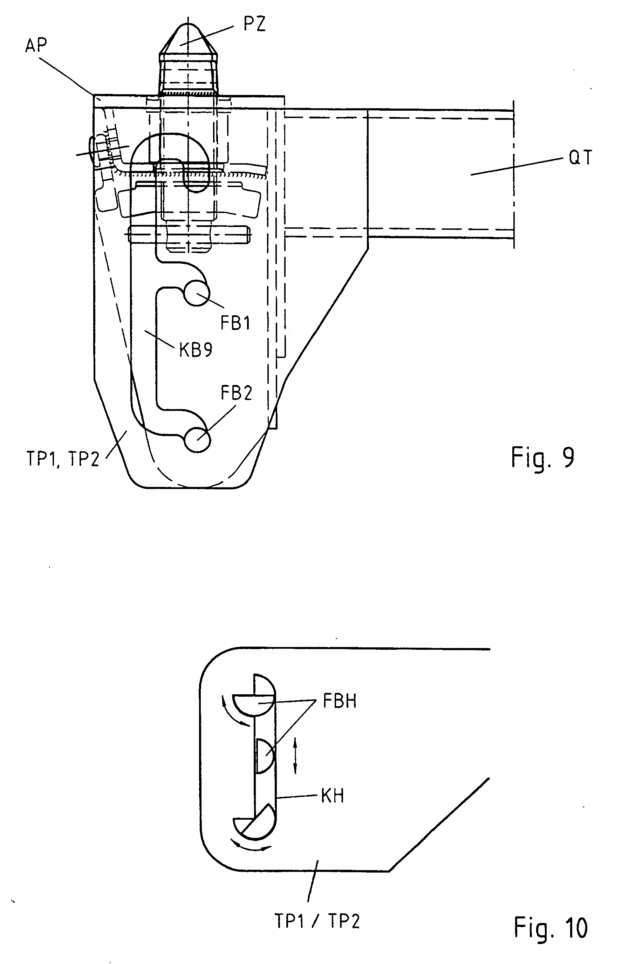

Bei der in Fig. 9 skizzierten Anordnung ist das Verriegelungsgehäuse mit zwei Führungsbolzen FB1, FB2 in einer Kulisse KB9 parallel geführt, wobei wiederum der Verschiebung zwischen einer oberen und einer unteren Halteposition (gezeigt ist die untere Halteposition) eine horizontale Wegkomponente umfasst. Die Einfügung einer horizontalen Wegkomponente bei der Verschiebung zwischen einer oberen und einer unteren Halteposition ermöglicht allgemein, wie die skizzierten Beispiele veranschaulichen, dass die vertikale Unterstützung des Führungsbolzens oder eines anderen Lagerelements in der oberen Halteposition trotz der exakt vertikal darunterliegenden Position dieses Lagerelements in der unteren Halteposition ortsfest in der Trägeranordnung und damit einfach und stabil ausgeführt sein kann.

Die Kulissenanordnung bietet mit der unkomplizierten Führung der Verriegelungseinheit bei der Verschiebung, der einfachen Sicherung gegen Verlieren oder Entwenden, den definierten Endpositionen, der Realisierbarkeit als Ausschnitt in einer ebenen Platte und dem gleichzeitig geringen Verbrauch an Plattenfläche und damit geringer Beeinträchtigung der Tragfähigkeit der Tragplatten besondere Vorteile.

Die Verriegelungseinheit wird für die Verschiebung zwischen der oberen und der unteren Halteposition vorzugsweise vom Querträger QT weg nach außen verlagert, wofür im Beispiel nach Fig. 9 die Kulissenbahn zwischen den Endpositionen gegenüber diesen vom Querträger weg versetzt ist. In den Ausführungen nach Fig. 1 bis Fig. 8 wird die Verriegelungseinheit durch die Verschwenkung nach außen verlagert. Die Endpositionen der Kulissenbahnen liegen hier gegenüber dem übrigen Verlauf der Kulissenbahnen außen, so dass einerseits eine breite Basis der Abstützung zwischen Führungsbolzen und Stützplattenabschnitt in der oberen Halteposition gegeben ist und zum anderen die seitliche Erstreckung der Tragplatten gering gehalten werden kann.

Die Fig. 10 zeigt eine weitere Variante, bei welcher in Abwandlung der Ausführungen nach Fig. 1 bis Fig. 8 die Bolzenenden des Führungsbolzen einseitig abgeflacht sind und lediglich Halbrundstababschnitte FBH bilden und die Endpositionen der Kulissenbahn KBH an die Bolzenenden angepaßte Viertelkreisaussparungen bilden, in welchen die Bolzenenden gegen lineare Verschiebungen in alle Richtungen gesichert sind. Ein Lösen aus dieser gesicherten Position erfolgt durch Verschwenken der mit den Bolzen verbundenen Verriegelungseinheit um die Bolzenlängsachse, worauf die Bolzenenden in einem vertikalen Kulissenabschnitt zwischen den Endpositionen verschiebbar sind und durch Zurückschwenken der Verriegelungseinheit in die Endpositionen einrükken. In diesem Beispiel tritt keine horizontale Bewegungskomponente des gesamten Bolzens bei der Verschiebung zwischen den Endpositionen auf, sondern lediglich eine Verschwenkung und eine vertikale Verschiebung. Der vertikale Verlauf der Kulissenbahn ist wiederum von nachrangiger Bedeutung. Eine Lagesicherung durch abgeflachte Bolzenenden ist auch für andere Kulissenbahnführungen denkbar.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können die Kulissenbahn auch in der Verriegelungseinheit ausgebildet und darin geführte Kulissenelemente an der Trägeranordnung befestigt sein.

## Patentansprüche

1. Verriegelungsanordnung zur Halterung eines Containers auf einem Fahrgestell, mit einer in einer Trägeranordnung (TP1, TP2) in wenigstens zwei unterschiedlichen, vertikal gegeneinander versetzten Haltepositionen abstützbaren und zwischen den beiden Haltepositionen verlagerbaren Verriegelungseinheit, welche ein Verriegelungsgehäuse (AP, STP, SP1, SP2) und ein in dem Verriegelungsgehäuse bewegliches Verriegelungsmittel (PZ) enthält, **dadurch gekennzeichnet, dass** die Verlagerung der Verriegelungseinheit wenigstens abschnittsweise eine in einer zwischen Trägeranordnung und Verriegelungseinheit ausgebildeten Kulissenanordnung (KB) geführte Verschiebung umfasst.

2. Anordnung nach Anspruch 1, **dadurch gekennzeichnet, dass** die Verlagerung der Verriegelungseinheit (AP, STP, SP1, SP2, PZ) zwischen den beiden Haltepositionen eine horizontale Verschiebungskomponente und/oder eine Verschwenkung in vertikaler Richtung um eine horizontale Schwenkachse erfordert.

3. Anordnung nach Anspruch 1 oder 2, **dadurch gekennzeichnet, dass** die Kulissenanordnung (KB) eine durchgehende Führung zwischen den beiden Haltepositionen bildet.

4. Anordnung nach einem der Ansprüche 1 bis 3, **dadurch gekennzeichnet, dass** die Verriegelungseinheit (AP, STP, SP1, SP2, PZ) zwischen beiden Haltepositionen parallel verschiebbar in mindestens einer der Haltepositionen geführt ist.

5. Anordnung nach Anspruch 1, **dadurch gekennzeichnet, dass** die Verriegelungseinheit (AP, STP, SP1, SP2, PZ) an wenigstens zwei Stützstellen, welche in horizontaler Richtung das Verriegelungsmittel (PZ) zwischen sich einschließen, ind er Trägeranordnung (TP1, TP2) abgestützt ist.

6. Anordnung nach Anspruch 5, **dadurch gekennzeichnet, dass** eine der Stützstellen zugleich ein Schwenklager für die vertikale Verschwenkung bildet.

7. Anordnung nach einem der Ansprüche 2 bis 6, **dadurch gekennzeichnet, dass** die Verschiebung zwischen den beiden Positionen sowohl eine Verkippung der Verriegelungseinheit (AP, STP, SP1, SP2, PZ) um eine horizontale Achse als auch eine horizontale Verschiebungskomponente beinhaltet.

8. Anordnung nach einem der Ansprüche 1 bis 7, **dadurch gekennzeichnet, dass** die Verriegelungseinheit (AP, STP, SP1, SP2, PZ) unverlierbar in der Trägeranordnung gehalten ist.

9. Anordnung nach einem der Ansprüche 1 bis 8, **dadurch gekennzeichnet, dass** die Kulissenbahn der Kulissenanordnung (KB) in der Trägeranordnung (TP1, TP2) ausgebildet ist.

10. Anordnung nach einem der Ansprüche 1 bis 9, **dadurch gekennzeichnet, dass** die Trägeranordnung durch zwei parallele vertikale ebene Platten (TP1, TP2) gebildet ist, welche die Verriegelungseinheit (AP; STP, SP1; SP2, PZ) zwischen sich einschließen.

11. Anordnung nach einem der Ansprüche 1 bis 10, **dadurch gekennzeichnet, dass** die Verriegelungseinheit (AP, STP, SP1, SP2, PZ) sich wenigstens in der oberen Position teilweise auf einem Querträger (QT) des Fahrgestells abstützt, an welchem die Trägeranordnung (TP1, TP2) befestigt ist.

12. Anordnung nach einem der Ansprüche 1 bis 10, **dadurch gekennzeichnet, dass** mittels einer Sicherungseinrichtung (FR) die Verriegelungseinheit (AP, STP, SP1, SP2, PZ) in beiden Positionen relativ zur Trägeranordnung (TP1, TP2) festlegbar ist.

13. Anordnung nach einem der Ansprüche 1 bis 12, **dadurch gekennzeichnet, dass** die Verriegelungseinheit (AP, STP, SP1, SP2, PZ) in eine unter der unteren Halteposition befindliche Parkposition verlagerbar ist.

14. Anordnung nach Anspruch 13, **dadurch gekennzeichnet, dass** die Positionsverlagerung der Verriegelungseinheit (AP, STP, SP1, SP2, PZ) zwischen der Parkposition und einer Halteposition eine Verschwenkung von mehr als 180° um eine horizontale Achse umfasst.

## Claims

1. Locking arrangement for securing a container on a chassis, with a locking unit which can be supported in a support arrangement (TP1, TP2) in at least two different, vertically offset holding positions, can be shifted between the two holding positions and contains a locking housing (AP, STP, SP1, SP2) and a locking means (PZ) movable in the locking housing, **characterized in that** the shifting of the locking unit at least in some sections comprises a displacement guided in a slotted-guide arrangement (KB) formed between support arrangement and locking unit.

2. Arrangement according to Claim 1, **characterized in that** the shifting of the locking unit (AP, STP, SP1, SP2, PZ) between the two holding positions requires a horizontal displacement component and/or a pivoting in the vertical direction about a horizontal pivot axis.

3. Arrangement according to Claim 1 or 2, **characterized in that** the slotted-guide arrangement (KB) forms a continuous guide between the two holding positions.

4. Arrangement according to one of Claims 1 to 3, **characterized in that** the locking unit (AP, STP, SP1, SP2, PZ) is guided displaceably in parallel between the two holding positions in at least one of the holding positions.

5. Arrangement according to Claim 1, **characterized in that** the locking unit (AP, STP, SP1, SP2, PZ) is supported in the support arrangement (TP1, TP2) at at least two supporting points which enclose the locking means (PZ) between them in the horizontal direction.

6. Arrangement according to Claim 5, **characterized in that** one of the supporting points at the same time forms a pivot bearing for the vertical pivoting.

7. Arrangement according to one of Claims 2 to 6, **characterized in that** the displacement between the two positions contains both a tilting of the locking unit (AP, STP, SP1, SP2, PZ) about a horizontal axis and also a horizontal displacement component.

8. Arrangement according to one of Claims 1 to 7, **characterized in that** the locking unit (AP, STP, SP1, SP2, PZ) is held captively in the support arrangement.

9. Arrangement according to one of Claims 1 to 8, **characterized in that** the slotted-guide track of the slotted-guide arrangement (KB) is formed in the support arrangement (TP1, TP2).

10. Arrangement according to one of Claims 1 to 9, **characterized in that** the support arrangement is formed by two parallel, vertical, planar plates (TP1, TP2) which enclose the locking unit (AP, STP, SP1, SP2, PZ) between them.

11. Arrangement according to one of Claims 1 to 10, **characterized in that** the locking unit (AP, STP, SP1, SP2, PZ) is partially supported, at least in the upper position, on a cross member (QT) of the chassis, to which the support arrangement (TP1, TP2) is fastened.

12. Arrangement according to one of Claims 1 to 10, **characterized in that** the locking unit (AP, STP, SP1, SP2, PZ) can be fixed in both positions relative to the support arrangement (TP1, TP2) by means of a securing device (FR).

13. Arrangement according to one of Claims 1 to 12, **characterized in that** the locking unit (AP, STP, SP1, SP2, PZ) can be shifted into a parking position situated below the lower holding position.

14. Arrangement according to Claim 13, **characterized in that** the shifting of the position of the locking unit (AP, STP, SP1, SP2, PZ) between the parking position and a holding position comprises pivoting by more than 180° about a horizontal axis.

## Revendications

1. Dispositif de verrouillage pour maintenir un conteneur sur un châssis, comportant une unité de verrouillage supportable dans un dispositif de support (TP1, TP2) dans au moins deux positions de maintien différentes décalées verticalement l'une par rapport à l'autre et déplaçable entre les deux positions de maintien, qui comprend un boîtier de verrouillage (AP, STP, SP1, SP2) et un moyen de verrouillage (PZ) mobile dans le boîtier de verrouillage, **caractérisé en ce que** le déplacement de l'unité de verrouillage comprend, au moins par parties, un déplacement guidé dans un dispositif de coulisse (KB) formé entre le dispositif de support et l'unité de verrouillage.

2. Dispositif selon la revendication 1, **caractérisé en ce que** le déplacement de l'unité de verrouillage (AP, STP, SP1, SP2, PZ) entre les deux positions de maintien nécessite une composante de déplacement horizontale et/ou un pivotement en direction verticale autour d'un axe de pivotement horizontal.

3. Dispositif selon la revendication 1 ou 2, **caractérisé en ce que** le dispositif de coulisse (KB) forme un guidage continu entre les deux positions de maintien.

4. Dispositif selon l'une quelconque des revendications 1 à 3, **caractérisé en ce que** l'unité de verrouillage (AP, STP, SP1, SP2, PZ) est guidée en déplacement parallèle entre les deux positions de maintien dans au moins une des positions de maintien.

5. Dispositif selon la revendication 1, **caractérisé en ce que** l'unité de verrouillage (AP, STP, SP1, SP2, PZ) est appuyée dans le dispositif de support (TP1, TP2) en au moins deux points d'appui, qui encadrent entre eux, en direction horizontale, le moyen de verrouillage (PZ).

6. Dispositif selon la revendication 5, **caractérisé en ce qu'**un des points d'appui forme en même temps un palier pivotant pour le pivotement vertical.

7. Dispositif selon l'une quelconque des revendications 2 à 6, **caractérisé en ce que** le déplacement entre les deux positions comprend aussi bien un basculement de l'unité de verrouillage (AP, STP, SP1, SP2, PZ) autour d'un axe horizontal qu'une composante de déplacement horizontale.

8. Dispositif selon l'une quelconque des revendications 1 à 7, **caractérisé en ce que** l'unité de verrouillage (AP, STP, SP1, SP2, PZ) est retenue de manière imperdable dans le dispositif de support.

9. Dispositif selon l'une quelconque des revendications 1 à 8, **caractérisé en ce que** le chemin de coulisse du dispositif de coulisse (KB) est formé dans le dispositif de support (TP1, TP2).

10. Dispositif selon l'une quelconque des revendications 1 à 9, **caractérisé en ce que** le dispositif de support est formé par deux plaques planes verticales parallèles (TP1, TP2), qui encadrent entre elles l'unité de verrouillage (AP; STP, SP1, SP2, PZ).

11. Dispositif selon l'une quelconque des revendications 1 à 10, **caractérisé en ce que** l'unité de verrouillage (AP, STP, SP1, SP2, PZ) s'appuie, au moins dans la position supérieure, en partie sur une traverse (QT) du châssis, sur laquelle le dispositif de support (TP1, TP2) est fixé.

12. Dispositif selon l'une quelconque des revendications 1 à 10, **caractérisé en ce que** l'unité de verrouillage (AP, STP, SP1, SP2, PZ) peut être fixée dans les deux positions par rapport au dispositif de support (TP1, TP2) au moyen d'un dispositif de fixation (FR).

13. Dispositif selon l'une quelconque des revendications 1 à 12, **caractérisé en ce que** l'unité de verrouillage (AP, STP, SP1, SP2, PZ) est déplaçable dans une position de rangement se trouvant en dessous de la position de maintien inférieure.

14. Dispositif selon la revendication 13, **caractérisé en ce que** le déplacement de position de l'unité de verrouillage (AP, STP, SP1, SP2, PZ) entre la position de rangement et une position de maintien comprend un pivotement de plus de 180° autour d'un axe horizontal.
